# EUROPÄISCHE PATENTSCHRIFT

(11) **EP 0 965 059 B1**
(45) Veröffentlichungstag und Bekanntmachung des Hinweises auf die Patenterteilung: **25.05.2005**
(21) Anmeldenummer: 98906800.2
(22) Anmeldetag: 14.01.1998
(51) Int. Cl.: G02B 1/11, G02B 1/12

(54) **ENTSPIEGELUNGSSCHICHT SOWIE VERFAHREN ZUR HERSTELLUNG DERSELBEN**
ANTI-REFLECTION COATING AND METHOD FOR PRODUCING SAME
COUCHE ANTIREFLET ET SON PROCEDE DE PRODUCTION

(30) Priorität: 04.03.1997 DE 19708776
(43) Veröffentlichungstag der Anmeldung: 22.12.1999
(73) Patentinhaber: Fraunhofer-Gesellschaft zur Förderung der angewandten Forschung e.V., 80686 München (DE)
(72) Erfinder: GOMBERT, Andreas, D-79106 Freiburg (DE); LERCHENMÜLLER, Hansjörg, D-77791 Berghaupten (DE)
(86) Internationale Anmeldenummer: PCT/DE1998/000117
(87) Internationale Veröffentlichungsnummer: WO 1998/039673

(56) Entgegenhaltungen:
- WO-A-95/31737
- DE-A- 3 121 785
- DE-A- 3 831 503
- US-A- 4 153 654
- US-A- 4 511 614
- US-A- 4 944 986

## Beschreibung

### Technisches Gebiet

Die Erfindung bezieht sich auf eine Entspiegelungsschicht mit einer aus einem optisch transparenten Material bestehenden Trägerschicht, die wenigstens auf einer Oberflächenseite antireflektierende Eigenschaften hinsichtlich der auf die Oberfläche einfallenden Strahlungswellenlängen aufweist. Überdies werden erfindungsgemäße Verfahren zur Herstellung der Entspiegelungsschicht angegeben.

### Stand der Technik

An den Grenzflächen transparenter Medien, wie beispielsweise Glas- oder Kunststoffscheiben, die vorzugsweise für Fenster-, Bildschirm- oder Instrumentanzeigeflächen verwendet werden, wird stets ein Teil des auf die Grenzflächen einfallenden Lichtes reflektiert, also in den Raum zurückgespiegelt. Durch die auf der Grenzfläche der transparenten Medjen auftretenden Reflexerscheinungen werden die Durchsichteigenschaften sowie das Ablesevermögen bei Bildschirmen oder Anzeigen erheblich beeinträchtigt. Zur Verbesserung der Durchsichteigenschaften beziehungsweise des Ablesevermögens von Bildschirmen ganz allgemeiner Art sind Entspiegelungsmaßnahmen bekannt, die verschiedenartigen Einfluß auf die Reflexionseigenschaften an den Grenzflächen nehmen.

So können spiegelnde Oberfläche unter anderem dadurch entspiegelt werden, daß die Oberfläche mit einer geeigneten Rauhigkeit versehen wird. Zwar wird durch das Aufrauhen der Grenzflächenoberfläche derselbe Anteil des einfallenden Lichtes in den Raum zurückreflektiert, jedoch werden parallel auf die Oberfläche einfallende Lichtstrahlen durch die Oberflächenrauhigkeit in verschiedene Richtungen zurückreflektiert. Auf diese Weise werden klare Spiegelbilder vermieden, das heißt Lichtquellen, die normalerweise mit scharfen Kanten abgebildet an der Grenzfläche reflektiert würden, führen lediglich zu einer recht homogenen Aufhellung der auf gerauhten Grenzfläche. Auf diese Weise werden starke Leuchtdichteunterschiede vermieden und die Reflexe werden weit weniger störend empfunden.

Diese Art der Entspiegelung wird erfolgreich beispielsweise bei Displays mit der Bezeichnung Antiglare-Schicht eingesetzt. Ein wesentlicher Vorteil dieser Entspiegelungstechnik liegt in der Abformbarkeit der Strukturen durch preisgünstige Prägeprozesse. Nachteilhaft bei dieser Art der Entspiegelung ist jedoch, daß die hemisphärische Reflexion, d.h. die Summe aus spiegelnder und diffuser Reflexion in den gesamten rückwärtigen Raumbereich, im günstigsten Fall nicht erhöht wird, wodurch die Untergrundhelligkeit derartig präparierter Glasoberflächen von Bildschirmen relativ hoch ist. Dies führt nicht zuletzt zu einer erheblichen Reduzierung des Kontrastes eines hinter einer solchen Antiglare-Schicht vorhandenen Bildes bzw. Anzeige.

Eine weitere Möglichkeit optische Flächen zu entspiegeln, besteht durch das Aufbringen geeigneter Interferenzschichten. Dabei wird die zu entspiegelnde Oberfläche mit einer oder mehreren dünnen Schichten mit geeignetem Brechungsindex und geeigneter Dicke beschichtet. Die Interferenzschichtstruktur ist dabei derart ausgebildet, daß in geeigneten Wellenlängenbereichen destruktive Interferenzerscheinungen im reflektierten Strahlungsfeld auftreten, wodurch beispielsweise Reflexe von Lichtquellen in ihrer Helligkeit stark reduziert werden. Jedoch verbleibt ihre Abbildung im reflektierten Strahlengang, im Unterschied zu der vorstehend genannten Antiglare-Schicht, scharf. Selbst bei einer visuellen Restreflexion < 0,4% wirken die scharfen Spiegelbilder bisweilen störender als die relativ hohe Helligkeit von Antiglare-Oberflächen. Das Kontrastverhältnis ist gut. Für die meisten Bildschirme und weiteren Anwendungen sind jedoch Interferenzschichten in der Herstellung zu teuer.

Eine dritte Alternative zur Entspiegelung optischer Flächen besteht im Einbringen sogenannter Subwellenlängengitter, die auf der Grenzfläche eines optisch transparenten Mediums zu einem Brechzahlgradienten führt, wodurch eine optische Wirkung gleichsam der von Interferenzschichten erzeugt wird. Ein solcher Brechungsindexgradient wird durch Oberflächenstrukturen realisiert, sofern die Strukturen kleiner als die Wellenlängen des einfallenden Lichtes sind. Hierfür eignen sich günstigerweise die Herstellung periodischer Strukturen mittels holographischer Belichtung in einer Photoresistschicht, die auf der Oberfläche eines transparenten Mediums aufgebracht ist.

Beispiele derartiger Subwellenlängengitter sind den Druckschriften DE 38 31 503 C2 und DE 2 422 298 A1 entnehmbar.

Derartige Subwellenlängen-Oberflächengitter mit Perioden von 200 bis 300 nm eignen sich für die breitbandige Reflexionsminderung. Derartige Oberflächen, die auch unter dem Begriff "moth-eye-antireflection-surfaces" bekannt sind, sind in einem Artikel von M. C. Hutley, S. J. Willson, "The Optical Properties of Moth-Eye-Antireflection-Surfaces", OPTICA ACTA, 1982, Vol. 29, Nr. 7, Seite 993-1009, ausführlich beschrieben. Zwar besteht der große Vorteil derartige "Mottenaugen-Schichten" in der mittels Prägeprozessen preisgünstig zu vervielfältigenden Herstellungsweise, gleichsam der von Antiglare-Strukturen, doch ist die großflächige Herstellung derartiger Strukturen sehr schwierig, aufgrund der nur sehr engen optischen Toleranzbereiche hinsichtlich der Varianz von Strukturtiefen und einem sehr hohen Aspektverhältnis, d.h. sehr hohem Verhältnis aus Strukturtiefe und Periode der Strukturen, durch die sich verfälschende Farbeffekte einstellen können. Überdies bilden sich an derartigen Oberflächenvergütungen die Bilder von Lichtquellen ebenso scharf im reflektierten Bild ab, wie es bei Interferenzschichten der Fall ist.

### Darstellung der Erfindung

Der Erfindung liegt die Aufgabe zugrunde, eine Entspiegelungschicht mit einer aus einem optisch transparenten Material bestehenden Trägerschicht, die wenigstens auf einer Oberflächenseite antireflektierende Eigenschaften hinsichtlich der auf die Oberfläche einfallenden Strahlungswellenlängen aufweist, derart weiterzubilden, daß insbesondere beim Einsatz bei Bildschirmoberflächen das Kontrastverhältnis im wesentlichen nicht durch das Reflexionsverhalten an der optischen Grenzfläche beeinträchtigt wird. Diskrete Reflexionsbilder, wie sie bei Interferenzschichten und Reflexionen an Subwellenlängengittern auftreten, sollen vermieden werden. Die erfindungsgemäße Entspiegelungsschicht soll insbesondere hemisphärische Reflexionseigenschaften aufweisen, die im Reflexionsgrad weit unter denen von normalen Antiglare-Schichten liegen. Überdies soll ein Verfahren zur Herstellung der erfindungsgemäßen Entspiegelungsschicht angegeben werden, mit dem auch großflächige Entspiegelungsschichten herstellbar sind, bei trotz geringen Herstellkosten.

Die Lösung der der Erfindung zugrundeliegenden Aufgabe ist im Anspruch 1 angegeben. Anspruch 7 richtet sich auf ein erfindungsgemäßes Herstellverfahren. Die abhängigen Ansprüche enthalten die jeweiligen Erfindungsgedanken vorteilhaft ausbildende Merkmale.

Erfindungsgemäß ist eine Entspiegelungsschicht mit einer aus einem optisch transparenten Material bestehenden Trägerschicht, die wenigstens auf einer Oberflächenseite antireflektierende Eigenschaften hinsichtlich der auf die Oberfläche einfallenden Strahlungswellenlängen aufweist, derart ausgebildet, daß die antireflektierende Oberflächenseite eine Oberflächenrauhigkeit mit stochastisch verteilten Strukturen - den sogenannten Makrostrukturen - aufweist, und, daß die Makrostrukturen mit Oberflächenstrukturen periodischer Abfolge zusätzlich moduliert sind - den sogenannten Mikrostrukturen -, die Periodenlängen aufweisen, die kleiner als die Wellenlängen der auf die antireflektierende Oberfläche einfallende Strahlung sind.

Der Erfindung liegt die Idee zugrunde, die Vorteile der Reflexionseigenschaften der vorstehend beschriebenen, bekannten Antiglare-Schichten mit denen von Subwellenlängengittern zu vereinen. Durch die Überlagerung von Makro- und Mikrostrukturen auf ein und derselben optischen Oberfläche werden zum einen diskrete Reflexionsbilder aufgrund der Makrostrukturen verhindert, und zum anderen der Anteil durch hemisphärische Reflexion an der Oberfläche durch die Mikrostrukturen drastisch verringert. Insbesondere im Einsatz auf Monitordisplayoberflächen bewirkt die erfindungsgemäße Entspiegelungsschicht eine erhebliche Erhöhung der Kontrastverhältnisse, eine weitgehende Zerstörung von Spiegelbildreflexen und eine entscheidende Reduzierung von hemisphärischer und spiegelnder Reflexion.

Durch die erfindungsgemäße Überlagerung von Makro- und Mikrostrukturen ist auch eine großflächige Herstellung der erfindungsgemäßen Spiegelschicht im Unterschied zu den an sich bekannten "Mottenaugen-Strukturen" möglich, zumal die bei größeren Flächen, die nur mit Mottenaugen-Strukturen versehen sind, auftretende Fleckigkeit durch die Makrostruktur und die damit einhergehende diffuse Oberflächenbeschaffenheit regelrecht wegkaschiert, d.h. optisch in den Hintergrund gedrängt wird.

Um den gewünschten Effekt der diffusen Reflexion durch die Makrostrukturen zu erreichen, sind statistisch auf die Oberfläche der Entspiegelungsschicht aufzubringende Strukturen mit einer durchschnittlichen Strukturgröße, typischerweise in der Größenordnung des 10-100fachen der Wellenlänge der auf die Oberfläche einfallenden Strahlung. Durch die rein statistische Verteilung der Makrostrukturen erhält die Entspiegelungsschicht eine Oberflächenrauheit, durch die an der Oberfläche auftreffende Strahlung vollständig diffus reflektiert wird. Um die Nachteile der vorstehend beschriebenen, nicht verringerten hemisphärischen Reflexion zu vermeiden, gelangen die diffus reflektierten Strahlungsanteile, bedingt durch die zusätzlich an der Oberfläche vorgesehenen Mikrostrukturierung, die eine typische Periodenlänge von kleiner als 250 nm und eine typische Strukturtiefe von größer als 100 nm aufweist, gleichsam der Reflexion an Interferenzschichten in destruktive Interferenz. Aufgrund der destruktiven Interferenzerscheinungen werden die hemisphärischen Reflexionseigenschaften der erfindungsgemäßen Entspiegelungsschicht erheblich verbessert, wodurch sich insbesondere im Einsatz von Bildschirmoberflächen bzw. Instrumentendisplays verbesserteontrastverhältnisse ergeben. Auch eignet sich der Einsatz der erfindungsgemäßen Entspiegelungsschicht insbesondere für solare Anwendungen, wie beispielsweise die Verglasung von Solarzellen oder ähnlichen, photovoltaisch arbeitenden Systeme.

Durch die bevorzugte Ausführungsform der Entspiegelungsschicht auf einer Trägerfolie, die beispielsweise einseitig klebend ausgebildet sein kann, kann die Schicht auf die unterschiedlichsten optischen Systeme vielseitig angebracht werden. Insbesondere eignet sich die Entspiegelungsschicht für Flüssigkristallanzeigen und - bildschirme, bei denen die Schicht zusammen mit dem Polarisator in einer einzigen Folie kombiniert werden kann. Reflexionsmessungen haben ergeben, daß es mit Hilfe der erfindungsgemäßen Entspiegelungsschicht möglich ist, sowohl die direkte als auch die hemisphärische Reflexion visuell auf deutlich unter 1 % zu verringern.

Neben der Verwendung von Folien als transparente Trägerschicht, kann die erfindungsgemäße Entspiegelungsschicht auch direkt auf Glassubstrate aufgebracht werden, die beispielsweise als Displayoberfläche eines Monitors oder einer sonstigen Instrumentenanzeige dienen.

Ferner ist erfindungsgemäß ein Verfahren zur Herstellung einer Entspiegelungsschicht mit einer, aus einem optisch transparenten Material bestehenden Trägerschicht, die wenigstens auf einer Oberflächenseite antireflektierende Eigenschaften hinsichtlich der auf die Oberfläche einfallenden Strahlungswellenlängen aufweist, derart ausgebildet, daß sich das Verfahren aus der Kombination folgender Verfahrensschritte zusammensetzt:
In einem ersten Schritt wird wenigstens eine Oberfläche eines flächigen Substrats mit einer stochastisch verteilten Oberflächenstruktur, den sogenannten Makrostrukturen versehen.

Das Aufbringen von Makrostrukturen erfolgt entweder auf mechanischem, chemischem Weg oder mit Hilfe einer Photoresistschicht, die entsprechend belichtet wird, Alternativ kann auch die Substratoberfläche mit einer Beschichtung überzogen werden, die eine Oberflächenrauhigkeit in der gewünschten Weise aufweist oder bildet.

Ferner wird auf die vorstehend vorbehandelte Substratoberfläche, falls auf ihr noch keine Photoresistschicht aufgebracht worden ist, eine Photoresistschicht aufgetragen, die mit einem Interferenzmuster durch Überlagerung zweier kohärenter Wellenfelder belichtet wird, so daß Oberflächenstrukturen mit periodischer Abfolge, den sogenannten Mikrostrukturen entstehen. Die derart belichtete Photoresistschicht wird nachfolgend entwickelt. Im weiteren wird die Makro- und Mikrostrukturen aufweisende Substratoberfläche auf eine Prägematrix abgeformt, mittels der die aus einem optisch transparenten Material bestehende Trägerschicht im Rahmen eines Prägeprozesses strukturiert wird.

Die Herstellung der Makrostruktur auf einer Substratoberfläche kann auf mechanischem Wege vorzugsweise mittels Sandstrahlen, Glasperlstrahlen oder durch Läppen, d.h. mittels Schleifverfahren, die zur gewünschten Oberflächenaufrauhung führen, erfolgen.

Neben der mechanischen Aufrauhung bieten beispielsweise naßchemische Ätzverfahren alternative Wege, die Substratoberfläche mit der gewünschten Rauhigkeit zu versehen. Auch können Schichtablagerungen auf die Substratoberfläche, die die gewünschten Oberflächenrauhigkeiten aufweisen, zu den Makrostrukturen führen.

Neben der direkten Behandlung der Substratoberfläche sieht das Aufbringen einer Photoresistschicht auf die Substratoberfläche eine weitere, alternative Herstellungsweise für die Makrostruktur vor. Die Dicke der aufzutragenden Photoresistschicht muß dabei größer gewählt werden als die erzielbare Strukturtiefe, die man in Überlagerunge der Makrostrukturen und Mikrostrukturen erhält. So ist es zum einen möglich, durch inkohärente oder kohärente Belichtung der Photoresistschicht unter Verwendung von Grauwertmasken eine stochastische Strukturverteilung auf der Photoresistschicht zu erhalten. Alternativ oder in Ergänzung zu der vorstehenden Belichtungsvariante können auch Specklemuster in die Photoresistschicht einbelichtet werden. Hierzu eignen sich Diffusor-Glasscheiben, die mit kohärentem Licht bestrahlt werden. Die auf diese Weise vorbelichtete Photoresistschicht kann in diesem Stadium entwickelt werden, wodurch sich auf der Photoresistschicht, die wie gesagt genügend dick ausgebildet ist, ein stochastisch verteiltes Höhenprofil, die sogenannte Makrostruktur, ergibt.

Ebenso kann auch die vorstehend belichtete Photoresistschicht ohne Zwischenentwicklung einem weiteren Belichtungsschritt ausgesetzt werden, durch den die Mikrostrukturierung in die Oberfläche einbelichtet wird. Unter Zuhilfenahme zweier in Überlagerung gebrachter, kohärenter Wellenfelder wird die vorbelichtete, und gegebenenfalls entsprechend vorbehandelte Photoresistschicht mit dem sich aus der Überlagerung ergebenden Interferenzmuster belichtet, so daß sich auf der stochastisch verteilten Oberflächenstruktur eine periodische Abfolge sogenannter Mikrostrukturen bilden.

Gleichsam dem aus der Übertragungstechnik elektromagnetischer Wellen bekannten Prinzip der modulierten Trägerfrequenz, wird mit der vorstehend beschriebenen Verfahrensweise auf die Makrostruktur eine Mikrostruktur aufmoduliert. Ein nachgeschalteter Entwicklungsprozeß legt, sofern der Entwicklungsschritt zur räumlichen Erzeugung der Makrostruktur noch nicht durchgeführt worden ist, die gesamte Makro- und Mikrostruktur auf der Photoresistschicht räumlich frei.

Die auf diese Weise erhaltene Oberflächenstruktur wird in einem nachfolgenden, vorzugsweise galvanischem Abformvorgang auf einen typischerweise aus Nickel bestehenden Metallmasters übertragen. Der Metallmaster oder Kopien des Metallmasters dienen als Prägestempel für anschließende Prägeprozesse. Bei diesen anschließenden Prägeprozessen werden die erfindungsgemäßen Oberflächenstrukturen beispielsweise durch thermoplastische Formgebung oder durch UV-Aushärtung auf Trägerschichten übertragen, die typischerweise als Folien ausgebildet sind. Neben Folien bieten sich auch organische oder anorganische Beschichtungen oder auch feste Polymere an.

### Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: die schematisierte Darstellung der erfindungsgemäßen Oberflächenstruktur sowie
- Fig. 2: Diagrammdarstellung zur hemisphärischen Reflexion einer nach dem erfindungsgemäßen Verfahren entspiegelten Grenzflächesubstrat-Luft.

### Kurze Beschreibung eine Ausführungsbeispiels

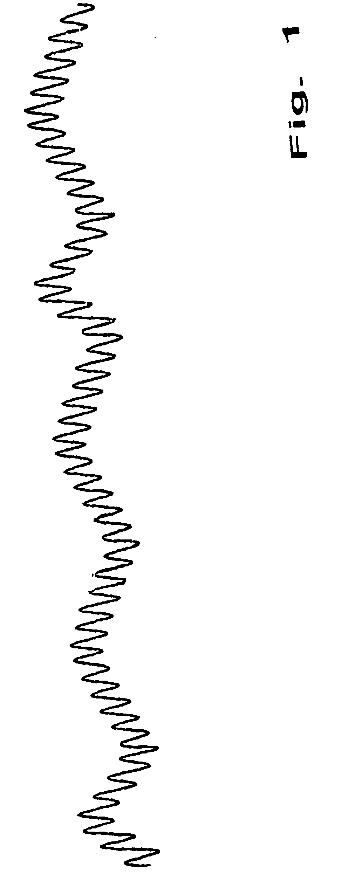

Aus Fig. 1 ist in bloßer schematischer Darstellung ein typisches Oberflächenprofil in Querschnittsdarstellung der erfindungsgemäßen Entspiegelungsschicht dargestellt. Die Makrostruktur unterliegt einer stochastischen, das heißt ungleichförmigen Verteilung und entspricht in Analogie zur Übertragungstechnik elektromagnetischer Wellen der Form einer Trägerwelle, die der in Fig. 1 dargestellten Oberflächenstruktur unterlegt werden kann. Auf die Trägerwelle, respektive auf die Makrostruktur ist die Mikrostrukturierung quasi aufmoduliert.

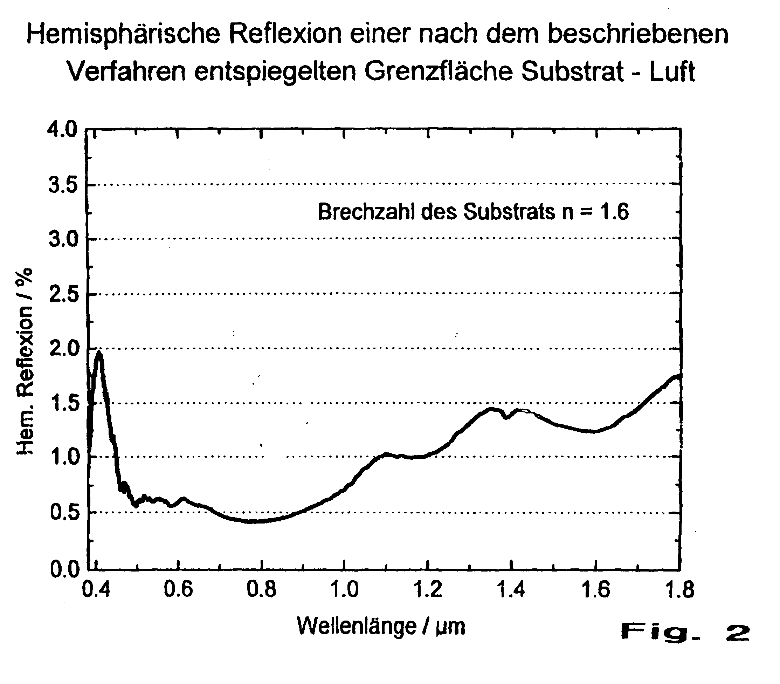

In Fig. 2 ist eine Diagrammdarstellung zu entnehmen, die einer Messung entspricht, bei der die Reflexionseigenschaften eines optisch transparenten Mediums mit einem Brechungsindex von 1,6 vermessen worden sind. Deutlich ist zu erkennen, daß die hemisphärische Reflexion über den gesamten sichtbaren Wellenlängenbereich sowie in den angrenzenden Infrarotbereich deutlich unter 2% liegt. Vergleichsmessungen mit blosen Antiglare-Entspiegelungsschichten haben gezeigt, daß diese um Größenordnungen über den gemessenen, in der Fig. 2 dargestellten Werten liegen.

## Patentansprüche

1. Optisch transparentes Substrat mit Entspiegelungsschicht mit antireflektierenden Eigenschaften hinsichtlich der auf die Oberfläche einfallenden Strahlungswellenlängen, derart ausgebildet, daß die antireflektierende Oberflächenseite eine Oberflächenrauhigkeit mit stochastisch verteilten Strukturen - den sogenannten Makrostrukturen - aufweist, und daß die Makrostrukturen mit Oberflächenstrukturen - den sogenannten Mikrostrukturen - zusätzlich moduliert sind,
**dadurch gekennzeichnet, daß** diese Mikrostrukturen eine periodische Abfolge aufweisen und die Periodenlängen kleiner als die Wellenlängen der auf die antireflektierende Oberfläche einfallenden Strahlung sind.

2. Substrat mit Entspiegelungsschicht nach Anspruch 1,
**dadurch gekennzeichnet, daß** die Makrostrukturen eine durchschnittliche Strukturgröße in der Größenordnung des 10 bis 100-fachen der Wellenlänge der Strahlung beträgt.

3. Substrat mit Entspiegelungsschicht nach Anspruch 1 oder 2,
**dadurch gekennzeichnet, daß** dieses als Folie ausgebildet ist.

4. Substrat mit Entspiegelungsschicht nach Anspruch 3,
**dadurch gekennzeichnet, daß** die Folie einseitig klebend ausgebildet ist.

5. Substrat mit Entspiegelungsschicht nach einem der Ansprüche 1 bis 4,
**dadurch gekennzeichnet, daß** die Periodenlänge der Mikrostrukturen kleiner als 250nm ist.

6. Substrat mit Entspiegelungsschicht nach einem der Ansprüche 1 bis 5,
**dadurch gekennzeichnet, daß** die Strukturtiefe der Mikrostrukturen größer als 100 nm beträgt.

7. Verfahren zur Herstellung eines optisch transparenten Substrats mit einer Entspiegelungsschicht mit antireflektiereneden Eigenschaften hinsichtlich der auf die Oberfläche einfallenden Strahlungswellenlängen,
**gekennzeichnet durch** die Kombination folgender Verfahrensschritte:
- eine Oberfläche eines flächigen Substrats wird auf mechanischem oder chemischen Weg derart aufgerauht, oder
- mit einer Photoresistschicht überzogen, die derart belichtet wird, oder
- mit einer Beschichtung versehen, die eine Oberflächenrauhigkeit bildet oder aufweist,
daß stochastisch verteilte Strukturen - sogenannte Makrostrukturen - entstehen,
- auf die Oberfläche des flächigen Substrates wird, falls noch nicht vorhanden, eine Photoresistschicht aufgebracht, die mit einem Interferenzmuster **durch** Überlagerung zweier kohärenter Wellenfelder belichtet wird, so daß Oberflächenstrukturen mit periodischer Abfolge - sogenannte Mikrostrukturen - entstehen,
- die belichtete Photoresistschicht wird entwickelt, und
- die Makro- und Mikrostrukturen aufweisende Substratoberfläche wird auf eine Prägematrix abgeformt, mittels der optisch transparentes Material im Rahmen eines Prägeprozesses strukturiert wird.

8. Verfahren nach Anspruch 7,
**dadurch gekennzeichnet, daß** der mechanische Weg der Oberflächenaufrauhung mittels Sandstrahlen oder Glasperlstrahlen erfolgt.

9. Verfahren nach Anspruch 7 oder 8,
**dadurch gekennzeichnet, daß** die Oberflächenaufrauhung durch Läppen bzw. Schleifen der Oberfläche erfolgt.

10. Verfahren nach Anspruch 7,
**dadurch gekennzeichnet, daß** der chemische Weg der Oberflächenaufrauhung mittels naßchemischen Ätzens erfolgt.

11. Verfahren nach Anspruch 7,
**dadurch gekennzeichnet, daß** eine Sol-Gel- Schicht auf die Oberfläche aufgebracht wird.

12. Verfahren nach einem der Ansprüche 7 bis 11,
**dadurch gekennzeichnet, daß** die Verfahrenschritte nach den Ansprüchen 7 bis 10 in beliebiger Weise kombiniert werden.

13. Verfahren nach einem der Ansprüche 7 bis 12,
**dadurch gekennzeichnet, daß** zur Herstellung der Makrostruktur die mit einer Photoresistschicht überzogene Oberfläche des flächigen Substrats mittels einer Grauwertverteilung aufweisenden Maske belichtet wird.

14. Verfahren nach einem der Ansprüche 7 bis 13,
**dadurch gekennzeichnet, daß** zur Herstellung der Makrostruktur die mit einer Photoresistschicht überzogene Oberfläche des flächigen Substrats mit einem Specklemuster, das eine stochastische Intensitätsverteilung enthält, belichtet wird.

15. Verfahren nach Anspruch 14,
**dadurch gekennzeichnet, daß** das Specklemuster mittels Durchstrahlung einer Diffusor-Glasscheibe mit kohärentem Licht erzeugt wird.

16. Verfahren nach einem der Ansprüche 7 bis 15,
**dadurch gekennzeichnet, daß** das Abformen der die Makro- und Mikrostrukturen aufweisenden Substratoberfläche auf die Prägematrix mittels Galvanoformung erfolgt.

17. Verfahren nach einem der Ansprüche 7 bis 16,
**dadurch gekennzeichnet, daß** der Prägeprozeß mittels thermoplastischen Prägens oder Prägens mit Strahlungshärtung, insbesondere UV-Aushärtung erfolgt.

18. Verfahren nach einem der Ansprüche 7 bis 16,
**dadurch gekennzeichnet, daß** der Prägeprozeß der die Makro- und Mikrostrukturen aufweisenden Substratoberfläche auf die Prägematrix mittels Spritzgußverfahren erfolgt.

## Claims

1. Optically transparent substrate, having an anti-reflective coating with anti-reflective properties with respect to the radiation wavelengths which are incident on the surface, configured in such a manner that the anti-reflective surface side has a surface roughness with stochastically distributed structures - the so-called macrostructures, and in that the macrostructures are in addition modulated with surface structures - the so-called microstructures, **characterised in that** these microstructures have a periodic sequence and the period lengths are smaller than the wavelengths of the radiation which is incident on the anti-reflective surface.

2. Substrate having an anti-reflective coating according to claim 1, **characterised in that** the macrostructures have an average structure size of the order of magnitude of 10 to 100 times the wavelength of the radiation.

3. Substrate having an anti-reflective coating according to claim 1 or 2, **characterised in that** said substrate is configured as a foil.

4. Substrate having an anti-reflective coating according to claim 3, **characterised in that** the foil has a one-sided adhesive configuration.

5. Substrate having an anti-reflective coating according to one of the claims 1 to 4, **characterised in that** the period length of the microstructures is smaller than 250 nm.

6. Substrate having an anti-reflective coating according to one of the claims 1 to 5, **characterised in that** the structure depth of the microstructures is greater than 100 nm.

7. Method for producing an optically transparent substrate, having an anti-reflective coating with anti-reflective properties with respect to the radiation wavelengths which are incident on the surface, **characterised by** the combination of the following method steps:
- a surface of a planar substrate is roughened by a mechanical or chemical method in such a manner, or
- coated with a photoresist layer, which is exposed in such a manner, or
- provided with a coating, which forms or has a surface roughness,
such that stochastically distributed structures - so-called macrostructures - are produced,
- a photoresist layer is applied, if not already present, on the surface of the planar substrate, which photoresist layer is exposed with an interference pattern by means of superimposition of two coherent wave fields, so that surface structures with a periodic sequence - so-called microstructures - are produced,
- the exposed photoresist layer is developed, and
- the substrate surface which has macro- and microstructures is moulded on an embossing matrix, by means of which optically transparent material is structured within the scope of an embossing process.

8. Method according to claim 7,
**characterised in that** the mechanical method of surface roughening is effected by means of sand blasting or glass bead blasting.

9. Method according to claim 7 or 8,
**characterised in that** the surface roughening is effected by lapping or grinding of the surface.

10. Method according to claim 7,
**characterised in that** the chemical method of surface roughening is effected by means of wet-chemical etching.

11. Method according to claim 7,
**characterised in that** a sol-gel layer is applied on the surface.

12. Method according to one of the claims 7 to 11,
**characterised in that** the method steps according to claims 7 to 10 are combined in any manner.

13. Method according to one of the claims 7 to 12,
**characterised in that**, in order to produce the macrostructure, the surface of the planar substrate, which is coated with a photoresist layer, is exposed by means of a mask which has a gray scale value distribution.

14. Method according to one of the claims 7 to 13,
**characterised in that**, in order to produce the macrostructure, the surface of the planar substrate, which is coated with a photoresist layer, is exposed with a speckle pattern which contains a stochastic intensity distribution.

15. Method according to claim 14,
**characterised in that** the speckle pattern is produced by means of irradiation of a diffuser glass disc with coherent light.

16. Method according t.o one of the claims 7 to 15,
**characterised in that** the moulding of the substrate surface which has the macro- and microstructures is effected on the embossing matrix by means of electroforming.

17. Method according to one of the claims 7 to 16,
**characterised in that** the embossing process is effected by means of thermoplastic embossing or embossing with radiation curing, in particular UV curing.

18. Method according to one of the claims 7 to 16,
**characterised in that** the embossing process of the substrate surface which has the macro- and microstructures is effected on the embossing matrix by means of injection moulding methods.

## Revendications

1. Substrat optique transparent muni d'une couche antireflet ayant des propriétés antiréfléchissantes vis-à-vis des longueurs d'ondes d'un rayonnement incident par rapport à la surface de façon que la surface supérieure antiréfléchissante présente une rugosité avec des structures à répartition stochastique (macrostructures)
et les macrostructures sont en outre modulées par des structures de surfaces (microstructures)
**caractérisé en ce que**
les microstructures correspondent à une suite périodique et la longueur de la période est inférieure aux longueurs d'ondes du rayonnement incident tombant sur la surface antiréfléchissante.

2. Substrat muni d'une couche antireflet selon la revendication 1,
**caractérisé en ce que**
les macrostructures ont une dimension moyenne de structure de l'ordre de grandeur de 10 à 100 fois la longueur d'onde du rayonnement.

3. Substrat muni d'une couche antireflet selon la revendication 1 ou 2,
**caractérisé en ce qu'**
il est réalisé sous la forme d'un film.

4. Substrat muni d'une couche antireflet selon la revendication 3,
**caractérisé en ce que**
le film est collant sur une face.

5. Substrat muni d'une couche antireflet selon l'une des revendications 1 à 4,
**caractérisé en ce que**
la longueur de la période des microstructures est inférieure à 250 nm.

6. Substrat muni d'une couche antireflet selon l'une des revendications 1 à 5,
**caractérisé en ce que**
la profondeur des microstructures est supérieure à 100 nm.

7. Procédé de fabrication d'un substrat optiquement transparent muni d'une couche antireflet ayant des caractéristiques antiréfléchissantes vis-à-vis des longueurs d'ondes du rayonnement incident par rapport à la surface,
**caractérisé par** la combinaison des étapes de procédé suivantes :
- on rend rugueuse la surface d'un substrat plat par une opération mécanique ou chimique, ou
- on applique une couche de photorésist que l'on expose, ou
- on munit d'un revêtement qui constitue la rugosité de surface ou la présente, de façon à obtenir des structures à répartition stochastique (macrostructures),
- sur la surface du substrat plat, si celle-ci n'est pas encore prévue on applique une couche de photorésist que l'on expose à un modèle d'interférence par combinaison de deux champs d'ondes cohérentes pour obtenir des structures de surface ayant une suite périodique de microstructures,
- on développe la couche de photorésist exposée, et
- on moule la surface du substrat présentant les macro et les microstructures avec une matrice d'impression à l'aide d'une matière optiquement transparente que l'on structure dans le cadre d'un procédé d'impression.

8. Procédé selon la revendication 7,
**caractérisé en ce que**
l'opération mécanique pour rendre rugueuse la surface consiste à utiliser des jets de sable ou des jets de perles de verre.

9. Procédé selon les revendications 7 ou 8,
**caractérisé en ce qu'**
on rend rugueuse la surface par rodage ou par ponçage de la surface.

10. Procédé selon la revendication 7,
**caractérisé en ce que**
l'opération chimique pour rendre rugueuse la surface se fait par gravure chimique humide.

11. Procédé selon la revendication 7,
**caractérisé en ce qu'**
on applique une couche de sol-gel à la surface.

12. Procédé selon l'une des revendications 7 à 11,
**caractérisé en ce qu'**
on combine d'une manière quelconque les étapes opératoires des revendications 7 à 10.

13. Procédé selon l'une des revendications 7 à 12,
**caractérisé en ce que**
pour réaliser la macrostructure on expose la surface revêtue de la couche de photorésist du substrat plat à l'aide d'un masque présentant une répartition de valeurs de gris.

14. Procédé selon l'une des revendications 7 à 13,
**caractérisé en ce que**
pour fabriquer la macrostructure on expose la surface du substrat plat revêtu d'une couche de photorésist à l'aide d'un modèle de speckles ayant une répartition d'intensité stochastique.

15. Procédé selon la revendication 14,
**caractérisé en ce qu'**
on forme le modèle de speckles par un rayonnement traversant une vitre de verre de diffusion avec de la lumière cohérente.

16. Procédé selon l'une des revendications 7 à 15,
**caractérisé en ce que**
le moulage de la surface du substrat ayant des macro et microstructures se fait sur la matrice d'impression par moulage galvanoplastique.

17. Procédé selon l'une des revendications 7 à 16,
**caractérisé en ce qu'**
on effectue le procédé d'impression par impression thermoplastique ou impression par un rayonnement durcisseur, en particulier un durcissement aux rayons UV.

18. Procédé selon l'une des revendications 7 à 16,
**caractérisé en ce qu'**
on exécute le procédé d'impression de la surface du substrat muni des macro et microstructures sur la matrice d'impression par un procédé d'injection.
